# EUROPEAN PATENT APPLICATION

(11) **EP 4 672 017 A1**
(43) Date of publication of application: **31.12.2025**
(21) Application number: 25181308.5
(22) Date of filing: 06.06.2025
(51) Int. Cl.: G06F 16/21, G06F 16/28

(54) **AUTOMATED UPDATE OF PROCESS TEMPLATES**

(30) Priority: 27.06.2024 US 202418757195
(71) Applicant: SAP SE, 69190 Walldorf (DE)
(72) Inventor: BERG, Gregor, D-69190 Walldorf (DE); Kampik, Timotheus, D-69190 Walldorf (DE); Eickhoff, David, D-69190 Walldorf (DE); Baier, Stephan, D-69190 Walldorf (DE)
(74) Representative: DeltaPatents B.V.

(57) **Abstract**

Large enterprises often modify standard process templates provided by software vendors to better suit their organizational processes. These modifications, which can include tracking new types of events or using modified event definitions, are typically difficult for the software vendor to detect. However, they can represent improvements to the template that could provide enhanced functionality for other organizations. The present disclosure provides techniques and solutions for detecting and analyzing such modifications made by organizations. It determines whether a subset of these modifications are semantically equivalent and whether they satisfy a threshold. If the threshold is satisfied, the process template is updated to include a modification of the semantically equivalent modifications, providing an updated version of the standard template that can be provided to other organizations.

## Description

### FIELD

The present disclosure generally relates to process mining and techniques for updating computer implementation artifacts used in process mining.

### BACKGROUND

Enterprise-level software is critical to the operation of modern businesses, and includes complex software systems for performing operations in areas such as enterprise resource planning (ERP), customer relations management, capturing transactional information, or controlling manufacturing processes. While the software may be used in the operation of a business, the software is technically complex and is used to process huge volumes of data. In addition to resources needed to program and maintain the software, and significant amounts of computing resources such as processors, memory, and storage, significant effort can be required to configure software for a particular purpose.

As one example, software can help track processes, including to determine how the entity is operating, which can include tracking various performance measures and comparing them to targets or benchmarks. Significant effort can be required to define these processes, and to ensure that they accurately reflect actual operations of an entity. In some cases, automatic process discovery techniques can be used, while in other cases processes can be at least partially manually defined.

Automated process discovery often uses advanced data analytics techniques to extract, visualize, and analyze event logs, transaction records, and system interactions. However, the execution of automated process mining can be a resource-intensive endeavor, both in terms of time and computing resources. The process typically involves the collection and preprocessing of large volumes of event data from disparate sources, which can require significant time and effort to ensure data quality, completeness, and consistency. Additionally, the computational complexity of process mining algorithms, such as process discovery, conformance checking, and performance analysis, may demand substantial computing resources.

Processes can also be manually defined. Manual process definition involves capturing and representing business workflows, and requires significant human capital and effort, both in defining processes and representing them in software. The identification and discovery phase typically entails stakeholder interviews, workshops, and documentation review to determine the sequence of activities, decision points, and stakeholders involved in each process.

Following this, process modeling techniques, such as Business Process Model and Notation (BPMN) or Unified Modeling Language (UML), are often used to create graphical representations of the intended process flow. Computer-implemented data structures or other computer implementation artifacts are defined to represent process elements, including activities, events, decisions, participants, and data objects. These data structures are subsequently mapped to database objects, such as tables or views. Manual process definition allows for precise customization and alignment with organizational requirements, but can be resource-intensive and may require ongoing maintenance to accommodate changes in business processes.

Issues can arise when aspects of a process model are modified, or when mined processes of an entity do not match a predefined structure. In some cases, the modifications or differences can represent process improvements, or at least additional information that could be useful to track. However, it can be difficult to identify these changes and propagate them to other process definitions. Accordingly, room for improvement exists.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Large enterprises often modify standard process templates provided by software vendors to better suit their organizational processes. These modifications, which can include tracking new types of events or using modified event definitions, are typically difficult for the software vendor to detect. However, they can represent improvements to the template that could provide enhanced functionality for other organizations. The present disclosure provides techniques and solutions for detecting and analyzing such modifications made by organizations. It determines whether a subset of these modifications are semantically equivalent and whether they satisfy a threshold. If the threshold is satisfied, the process template is updated to include a modification of the semantically equivalent modifications, providing an updated version of the standard template that can be provided to other organizations.

In one aspect, the present disclosure provides a process of generating an updated process template by processing modifications, such as made by organizations, to a process template, such as a standard process template, to provide an updated version of the standard process template. A first plurality of modifications to a process template are received. The process template includes one or more event definitions. Each modification of the first plurality of modifications includes a modification of an event definition or an addition of an event definition.

It is determined whether at least a subset of the plurality of modifications are semantically equivalent. It is determined whether an amount of semantically equivalent modifications satisfies a threshold. In response to determining that the amount of semantically equivalent modifications satisfies the threshold, the process template is updated to include a modification of the semantically equivalent modifications to provide an updated process template.

The present disclosure also includes computing systems and tangible, non-transitory computer readable storage media configured to carry out, or including instructions for carrying out, an above-described method. As described herein, a variety of other features and advantages can be incorporated into the technologies as desired.

### BRIEF DESCRIPTION OF THE DRAWINGS

FIG. 1 is a diagram illustrating a domain model, such as a domain model for use in a process template useable for process mining or process analysis.
FIG. 2 is a diagram illustrating an event domain model for events defined with respect to the domain model of FIG. 1.
FIG. 3 is a diagram of a process that uses events of the event domain model of FIG. 2.
FIGS. 4A-4D illustrate an example JSON listing of a domain model and an event domain model.
FIGS. 5A-5D illustrate an example process template for the process of FIG. 3.
FIG. 6 is a diagram of a process using a domain model and an event domain model, at least a portion of which can be represented in a process template, to extract events from a data store.
FIGS. 7A and 7B provide an example JSON representation of a "delta" of information between two process templates.
FIGS. 8 and 9 provide example semantically equivalent queries.
FIG. 10 is example Python code for determining whether queries are semantically equivalent.
FIG. 11 is a flowchart of a process of determining and deploying updates to process templates.
FIG. 12 is an example user interface where a user can be presented with proposed template changes and choose to have them implemented in their current template version.
FIG. 13 is a flowchart of an example process of generating an updated process template by processing modifications, such as made by organizations, to a process template, such as a standard process template, to provide an updated version of the standard process template.
FIG. 14 is a diagram of an example computing system in which some described embodiments can be implemented.
FIG. 15 is an example cloud computing environment that can be used in conjunction with the technologies described herein.

### DETAILED DESCRIPTION

### Example 1- Overview

Enterprise-level software is critical to the operation of modern businesses, and includes complex software systems for performing operations in areas such as enterprise resource planning (ERP), customer relations management, capturing transactional information, or controlling manufacturing processes. While the software may be used in the operation of a business, the software is technically complex and is used to process huge volumes of data. In addition to resources needed to program and maintain the software, and significant amounts of computing resources such as processors, memory, and storage, significant effort can be required to configure software for a particular purpose.

As one example, software can help track processes, including to determine how the entity is operating, which can include tracking various performance measures and comparing them to targets or benchmarks. Significant effort can be required to define these processes, and to ensure that they accurately reflect actual operations of an entity. In some cases, automatic process discovery techniques can be used, while in other cases processes can be at least partially manually defined.

Automated process discovery often uses advanced data analytics techniques to extract, visualize, and analyze event logs, transaction records, and system interactions. However, the execution of automated process mining can be a resource-intensive endeavor, both in terms of time and computing resources. The process typically involves the collection and preprocessing of large volumes of event data from disparate sources, which can require significant time and effort to ensure data quality, completeness, and consistency. Additionally, the computational complexity of process mining algorithms, such as process discovery, conformance checking, and performance analysis, may demand substantial computing resources.

Processes can also be manually defined. Manual process definition involves capturing and representing business workflows, and requires significant human capital and effort, both in defining processes and representing them in software. The identification and discovery phase typically entails stakeholder interviews, workshops, and documentation review to determine the sequence of activities, decision points, and stakeholders involved in each process.

Following this, process modeling techniques, such as Business Process Model and Notation (BPMN) or Unified Modeling Language (UML), are often used to create graphical representations of the intended process flow. Computer-implemented data structures or other computer implementation artifacts are defined to represent process elements, including activities, events, decisions, participants, and data objects. These data structures are subsequently mapped to database objects, such as tables or views. Manual process definition allows for precise customization and alignment with organizational requirements, but can be resource-intensive and may require ongoing maintenance to accommodate changes in business processes.

Issues can arise when aspects of a process model are modified, or when mined processes of an entity do not match a predefined structure. In some cases, the modifications or differences can represent process improvements, or at least additional information that could be useful to track. However, it can be difficult to identify these changes and propagate them to other process definitions. Accordingly, room for improvement exists.

In some cases, enterprise level software may come with process templates. Process templates serve as structured frameworks for documenting, standardizing, and analyzing business processes within organizations. At a conceptual level, a process template typically includes elements such as process activities, decision points, participants, inputs, outputs, and dependencies. These templates provide a standardized representation of the process flow, enabling stakeholders to understand, communicate, and analyze processes consistently.

At a technical implementation level, process templates can be implemented in a variety of ways. One common approach is to represent process templates using XML or JSON formats, which allow for flexible and extensible definitions of process elements. For example, an XML-based process template might define activities using tags such as <activity>, <decision>, or <task>, with attributes specifying activity names, descriptions, inputs, outputs, and participants. Further, such templates can consist of a breadth of different artifacts which can be packaged and provided as a zipped archive file.

Process templates can be implemented using domain-specific modeling languages or tools tailored to process modeling and analysis, including those that operate using the file-based information discussed above. These tools often provide graphical user interfaces for designing and editing process templates, allowing users to drag-and-drop process elements onto a canvas and define their properties using form-based interfaces. Behind the scenes, the tool generates code or configuration files representing the process template, which can then be deployed and executed within process management systems or workflow engines.

In addition to representing the structure and logic of the process flow, process templates may also include metadata or annotations to capture additional information such as process variants, performance metrics, compliance requirements, or organizational guidelines. This metadata enhances the usability and interpretability of the process templates, enabling more comprehensive analysis and optimization of business processes. Furthermore, predefined templates for various business processes are often mapped to a database schema to facilitate efficient data storage, retrieval, and manipulation within an enterprise software system. This mapping ensures alignment between the process templates and the underlying database structure. For example, within the context of ERP (Enterprise Resource Planning) software, predefined templates for various business processes are often mapped to a database schema to facilitate efficient data storage, retrieval, and manipulation within the relevant computing system, such as an ERP system.

As a more specific example, consider a process template (such as including a domain model and an event domain model) expressed in a spreadsheet format, such as using MICROSOFT EXCEL. Within the spreadsheet file, each process template can be organized into separate worksheet tabs. Columns within each worksheet represent different process elements such as activities, decision points, participants, inputs, outputs, dependencies, and metadata. Each column is typically labeled with a header indicating the type of information it contains. Rows within the worksheet correspond to specific steps or tasks within the process, with cells containing details about each process element, such as activity names, descriptions, inputs, outputs, responsible parties, deadlines, and other relevant information.

Data validation features can help ensure data integrity and consistency within the template by enforcing predefined guidelines or standards. Moreover, spreadsheet functionality for formulae and functions enables calculations, automation of repetitive tasks, or generation of dynamic content.

In some cases, a spreadsheet file or other process template representation is mapped to specific tables or views in the database schema of the enterprise software system being analyzed. For instance, in a spreadsheet file, each row maps to a record in the database table, with each column representing a field or attribute of the record. Alternatively, an intermediate component, such as data integration tools or process mining software, can import the process model from the spreadsheet file and map it to relevant tables in the database schema. SIGNAVIO, available from SAP SE, is an example of a suitable intermediate component, which can integrate with process templates in various formats and create process template representations that are mapped to a database schema as described above. This intermediate component can perform data transformations, validation, and enrichment to ensure compatibility between the process model and event data. In addition to mapping the process model to the database tables, metadata mapping can be used to establish links between specific elements in the process model (e.g., activity names, IDs) and corresponding data fields in the event logs.

In the case of a standard process template, while the process template may be suitable for some organizations "as is," in many cases organizations will customize it (modifying the standard process template), either prior to using it or over time, such as in response to process refinements, or realizing that the template does not capture certain process information of existing process implementations.

While in some ways these modifications can be useful, since they better track the actual processes being used, they can cause problems in other ways. For example, an organization may wish to benchmark their processes against those of others. However, customizations may render these benchmarks unreliable, or prevent prior benchmarks from being determined at all. Further, if an organization has specific customizations, they may not be able to benchmark those, even if their peers have introduced similar customizations, since the customizations are not captured in a common standard, or otherwise linked.

As an example, consider a performance metric such as "automation rate of sales orders." The metric is calculated by a function that takes particular fields as input, such as those representing particular sales order attributes. A customization may change the fields being provided to the function, such as removing some fields or adding additional fields. The customizations can also change the interpretation of the data. For example, the automation rate may be calculated as higher values if additional values were defined as indicators of automation.

Disclosed techniques can track changes made to process templates of particular organizations. Changes from multiple organizations can be collectively analyzed, such as to determine whether the organizations have made semantically equivalent changes. If semantically equivalent changes satisfy a threshold, such as being made by a threshold number of organizations, the changes can be implemented in a standard template.

In some cases, updating standard templates can be performed on a more granular basis, such as considering characteristics of organizations. For example, looking at all organizations, it may be determined that not enough organizations implemented a change to update a standard template. However, focusing on different industries/lines of business of the organizations, it may be determined that a threshold number of organizations in a particular industry, such as oil and gas, made a change. In that case, the standard template can be "forked," such as providing an updated template to organizations in the oil and gas field but leaving the standard template unchanged for organizations in other industries. This can allow organizations to take advantage of template changes that may be useful in their particular industry.

In some cases, organizations may be offered a path to adopt the latest template. As organizations adopt the revised template, their ability to benchmark themselves against peers or peer groups increases or is re-established.

The disclosed innovations provide a variety of technical improvements. The technology improves process mining templates by automating the definition and coding of events, which significantly reduces manual effort and accelerates the implementation of process mining solutions. This automation helps establishes a standardized framework for event definition, ensuring consistency and coherence across different processes and datasets. Determining template updates in an automated manner can reduce the time where process templates of different organizations may diverge, as well as making process template improvements available to other organizations more rapidly.

### Example 2- Example Domain, Event Domain, and Process Template Representations

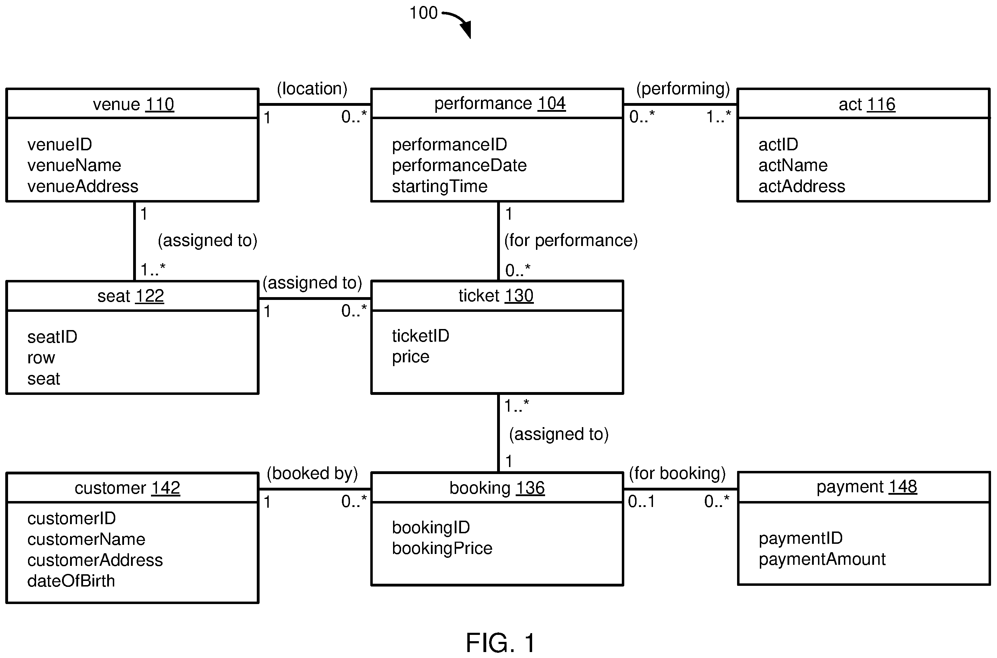

Process mining templates can be informed by other information structures, such as domain models or event domain models, as will be further described. A domain model provides a structured representation of fundamental concepts, entities, and relationships within a specific domain. An example domain model 100 is provided in FIG. 1, and defines entities such as Concert, Venue, Ticket, Customer, and their attributes and relationships. The domain model 100 can be correlated with computing objects that store corresponding data, such as tables or other database objects in a database schema.

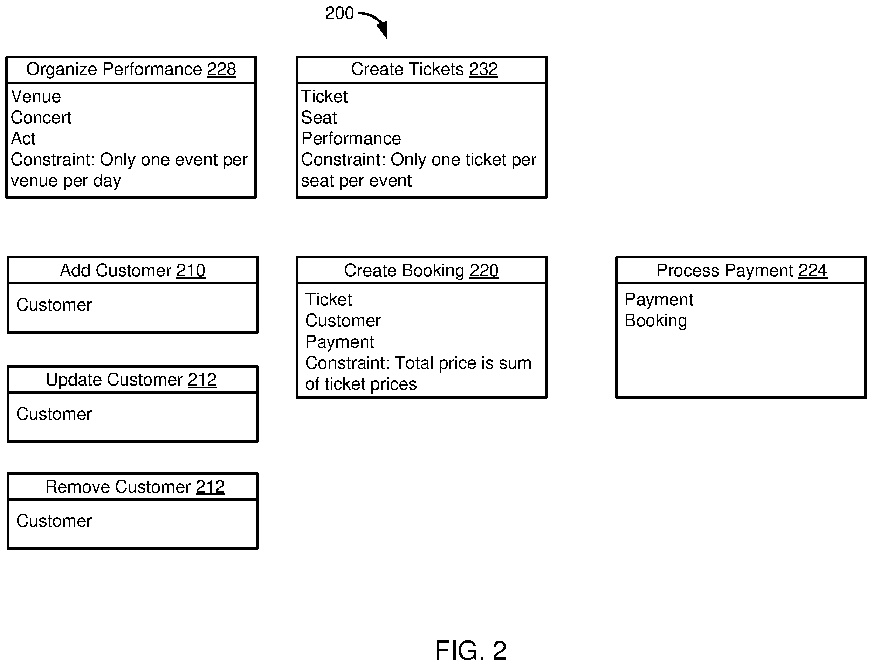

An event domain model, such as the event domain model 200 of FIG. 2, provides a representation of significant events or occurrences within a domain and their relationships to entities and processes. For instance, a domain model can capture events like scheduling a concert or booking a ticket, and their effects on domain entities. An event is considered to have occurred if the conditions defined for it can be observed in the historic data of the underlying system. Not all possible events are of interest for a customer (e.g., how often customers change their addresses) which is why the process analysis usually focusses on a dozen up to not more than 50 to evaluate the different paths the process instances have taken through the process and its implementation in the enterprise system.

A process template serves as a standardized framework for capturing and analyzing business processes, such as processes defined based on events of an event domain model and entities in a domain model. It defines process steps, activities, events, roles, and their relationships, facilitating process mining and optimization.

Turning to FIG. 1, the domain model 100 can be used to represent entities involved in processes for booking bands or other types of acts for a performance at a particular venue, and for selling tickets to the performance. For example, booking an act can be represented by a performance 104, where the performance has a date and start time, and is associated with a venue 110 and an act 116. A venue 110 has seats 122, and tickets 130 are issued for specific seats for specific performances 104. A booking 136 includes one or more tickets 130, and is made by a customer 142, who makes a payment 148 for the booking.

It can be seen that each entity in the domain model 100 has a number of attributes. For example, a performance 104 has an identifier, a date, and a time, while seats have a seat identifier, and location information for the seat, such as a row number and a seat number. Again, these attributes can be correlated with data values, such as where a table can store attribute values for performances 104, and another table can store attribute values for seats 122. Depending on implementation, data storage entities may exist for each entity in the domain model 100, or one or more domain model entities can be represented in a single data storage entity (such as a denormalized database table).

Note that entities in the domain model 100 may be subject to constraints, such as where only one performance can be booked at a given venue for a given day, or that two tickets cannot be issued for the same seat at the same performance.

The event domain model 200 of FIG. 2 illustrates events that can occur in a process, and can be specified for entities of the domain model 100. For example, the customer entity 142 can be associated with an event 210 to add a customer, an event 212 to update information associated with the customer (such as attributes of the customer entity), or an event 214 to remove a customer from the system.

Other events can be defined with respect to multiple entities. An event 220 to create a booking 136 can reference one or more tickets 130, a customer 142, and a payment 148. Events can be associated with definitions or constraints, such as where the created booking event 220 is defined such that the total price of the booking is the sum of the ticket prices in the booking. That is, while a constraint may or may not be enforced during the booking process, the constraint can be evaluated after the fact on mined process data. An event 224 corresponds to processing payment for a booking.

An organize performance event 228 and a create ticket event 232 also refer to multiple entities, and are subject to constraints.

As will be further explained, the event domain model 200 can be useful in understanding a process/process elements at more conceptual level, such as for use by business analysts, but are typically linked to particular computer implementation artifacts to perform actions such as identifying occurrences of events. As used herein, a computing implementation artifact refers to any technical construct, such as schema definitions, database tables, objects in virtual data models, code modules, or configurations, designed and used within computer systems to represent, store, process, or manipulate data, processes, or models. These artifacts are created and manipulated within the realm of computer programming and are integral components of software systems, serving as machine-readable representations of various conceptual entities, models, or operations. Unlike mental or manual representations, computing implementation artifacts are tailored for computer processing and are optimized for efficiency, scalability, and interoperability within software environments

As a simple example, the event 210 to add a customer can be associated with a query such as:

```
       SELECT
         EventType,
         EventTimestamp,
         (SELECT COUNT(*) FROM ChangeLogTable WHERE TableName =
       'CustomerTable' AND Operation = 'INSERT') AS TotalEventOccurrences
      FROM
         ChangeLogTable
      WHERE
         TableName = 'CustomerTable'
         AND Operation = 'INSERT';
```

The query returns records for each occurrence of the event, in the form of the event type and the event timestamp, and also returns the number of times the event occurred in the dataset. Additional queries to determine, e.g., the average age of all customers or which acts 116 are mostly booked by customers aged below 30 can be constructed the same way.

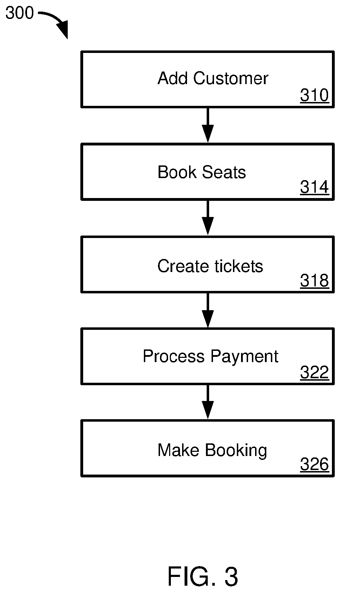

FIG. 3 illustrates an example process 300 of making a booking. The process of making a booking can use a subset of the events in the event domain model 200. **In** turn, the events of the event domain model 200 can be associated with particular entities and entity attributes in the domain model 100. The example process 300 can occur after an organizer contracts act for a performance at a particular venue.

At 310, a customer can be added, such as using input (attribute values) provided by the customer. That is, the event 310 for of the process 300 will be detected based on particular process data processed during processed mining. For example, an insertion of a row for a customer table can indicate the addition of a customer at 310. The customer can select particular seats, which are booked at 314. Booking can include updating a status of the seats to "occupied" or a similar designation. Again, the event 314 can be detected from process data, such as by an update to records for particular seats, associating them with a status change or assigning them to a particular booking. Tickets can be created for the booking at 318, including being associated with the respective seats, which can be reflected in process data through new records being added to a table representing tickets. Once all of the seats have been selected and tickets generated, a customer payment is processed at 322, which can be reflected in the process data as a new payment record. The booking is completed at 326, which can include persisting data changes made as a result of the process 300, such as making seats as "occupied" or "sold,", which again can be reflected in process data such as an update to records for the seats.

Again, a definition of the process 300 can be linked to computer functionality to identify occurrences of the process in a dataset, which can include looking at particular details of such occurrences, including in generating performance metrics. Continuing with the example, the following query returns process identifiers (that is, each event for a specific booking request includes the process identifier, identifying the events as part of the same transaction/instance) of processes that correspond to instances of the process 300, along with the total number of times the process was observed in the dataset.

```
       SELECT Process_ID, COUNT(Process_ID) AS Total_Occurrences
      FROM (
         SELECT DISTINCT process_id
         FROM event_log
         WHERE event_type = 'add_customer' AND process_id IN (
           SELECT DISTINCT process_id
           FROM event_log
           WHERE event_type = 'book_seats' AND process_id IN (
             SELECT DISTINCT process_id
             FROM event_log
             WHERE event_type = 'create_tickets' AND process_id IN (
               SELECT DISTINCT process_id
               FROM event_log
               WHERE event_type = 'process_payment' AND process_id IN (
                  SELECT DISTINCT process_id
                 FROM event_log
                 WHERE event_type = 'make_booking'
               )
             )
           )
         )
      ) AS Subquery
       GROUP BY Process_ID;
```

A number of metrics can be defined for the process 300, and can allow an organization to evaluate how the process is being performed, and in at least some cases compare their performance with particular peers or peer groups. Performance metrics that can be used in the process 300 include:
- Booking Time: The time to complete the booking process, from initiating the process 300 through the operation to complete the booking at 326.
- Response Time: The time taken to provide an indication of ticket availability, which can correspond to the book seats event 314, or particular subactivities thereof.
- Conversion Rate: The percentage of booking inquiries that lead to a complete booking.
- Seat Utilization: The percentage of seats that are booked for a given performance.
- Revenue Generate: The total revenue generated from ticket sales.

Typically, queries in this example revolve around the performance as the driving domain object in the analysis, to understand the lifecycle of a performance, its bottlenecks and ultimately derive ideas for improving how performances can be organized to greater success.

As an example, the following query can calculate booking time for process identifiers determined to have followed the process 300:

```
       SELECT Process_ID,
          MIN(Timestamp) AS Start_Time,
          MAX(Timestamp) AS End_Time,
          TIMESTAMPDIFF(SECOND, MIN(Timestamp), MAX(Timestamp)) AS
       Total_Time_Seconds
      FROM event_log
      WHERE Process_ID IN (SELECT DISTINCT Process_ID FROM
       earlier_query_result)
       GROUP BY Process_ID;
```

The query again illustrates that, although the domain model 100, the event domain model 200, and the process 300 can be defined and presented in a form more readily understood by organizations, and can be displayed graphically to users, they are also associated with computing implementation artifacts, including computer implementation artifacts that allow for storing data associated with entities of the domain model, events of the event domain model, and particular processes associated with a template, including particular performance metrics for such processes. A tuple that includes a domain model, an event model, and a resulting template can be designed for specific enterprise software and a specific process to be analyzed.

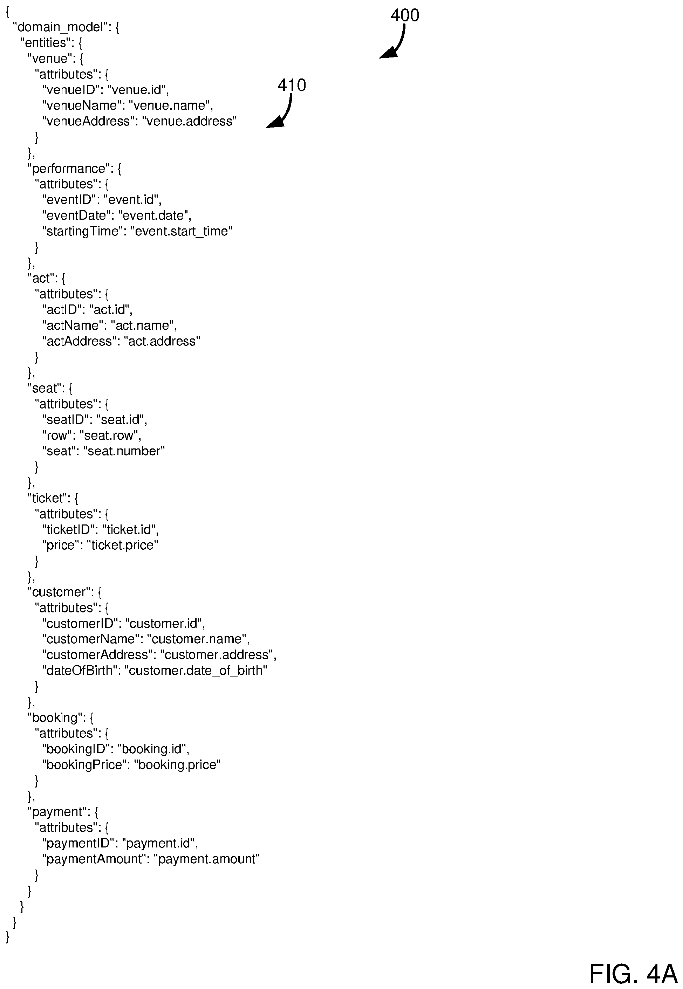

These domains, event domains, processes, and process template representations can be defined in computer implementation artifacts in various formats, including using XML or JSON. FIGS. 4A-4D provide an example JSON listing 400 that provides a domain model and an event domain model corresponding to the domain model 100 of FIG. 1 and the domain event model 200 of FIG. 2. FIG. 4A includes code 410 that defines the entities of the domain model 100, and their attributes. These attributes correspond to attributes of database artifacts, such as tables, that are processed to extract information about instances of the entities and events associated with such entities. The attributes can be mapped to particular tables that log information about data updates, for example, the CDPOS and CDHDR tables of system of SAP SE, of Walldorf Germany.

Data for particular entity instances can be stored by providing values for the keys represented in the code 410. In other scenarios, the JSON code 110 provides definitions of entities, but that actual data is stored elsewhere, such as in database tables that are operationally linked with the entities of the code 410.

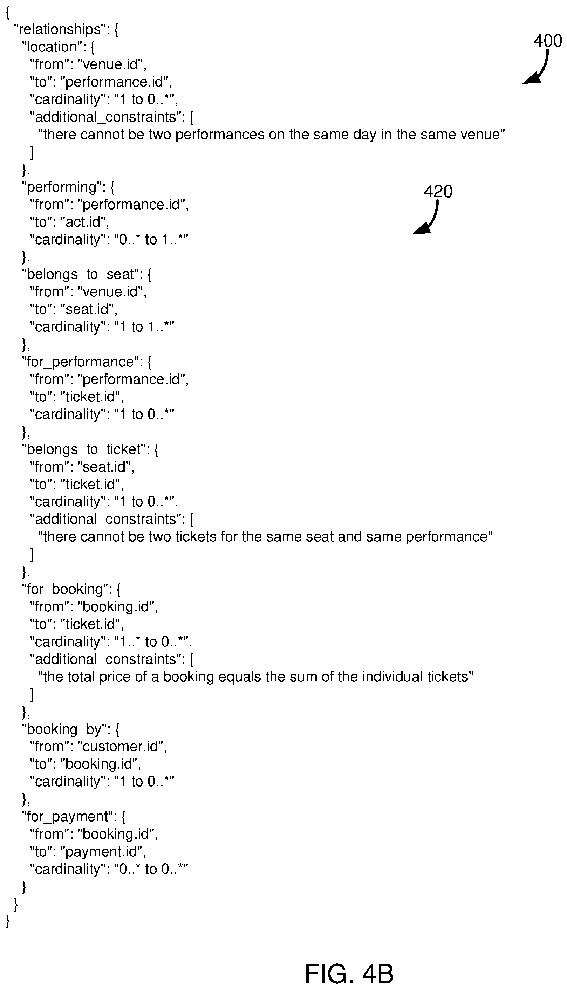

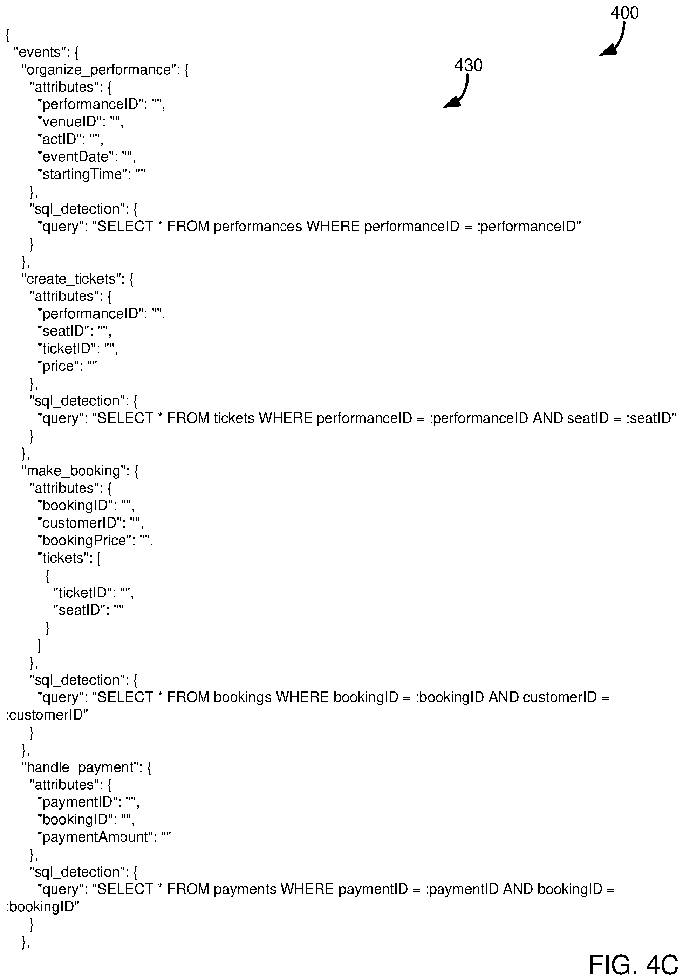

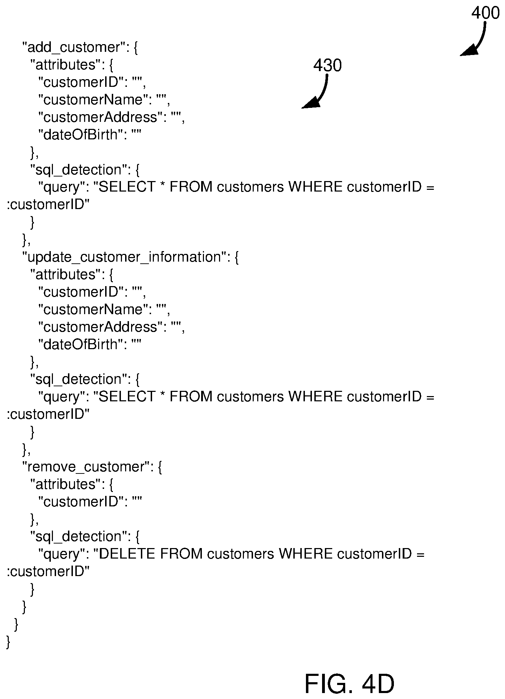

FIG. 4B includes code 420 that defines relationships between the entities of the code 410, as well as any constraints on the entities/their relationships. FIGS. 4C and 4D include code 430 that defines various events that can occur with the entities of the code 410, such as corresponding to events of the event domain model 200. Note that the code 430 can include events for multiple processes, and in this respect can differ from a process template. That is, a process template is typically defined for a specific process, which may involve multiple events, but typically less than all of the events of the event domain model 200. Processes can include other processes, such as including them as subprocesses. For example, the event domain model 200 can include an add customer process, but the add customer process can be a subprocess of a "make booking" process. Along with the definitions of the events, FIGS. 4C and 4D provide SQL statements 434 that can be executed to detect events in process data.

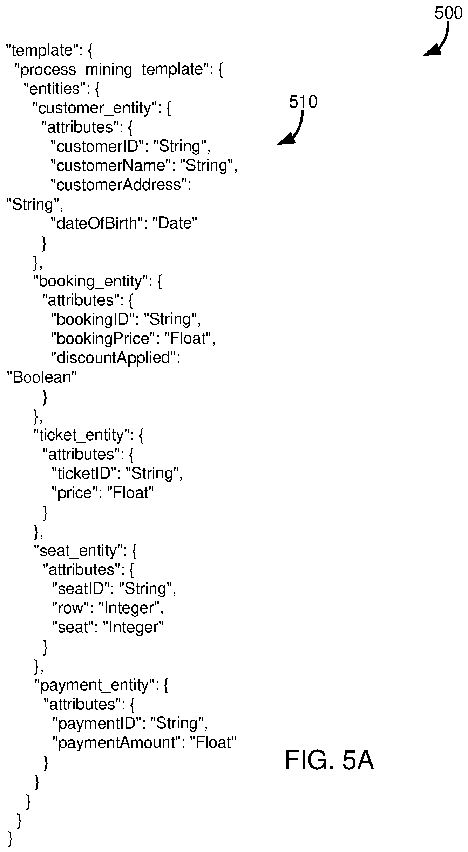

FIGS. 5A-5D provide an example template 500, in JSON format with keys and value datatypes, for a "make booking" process. The template 500 can includes parts of the domain model and event domain model of the JSON listing although, in at least some implementations, the template includes only entities, relationships, and events that are relevant to a particular process. In this case, the template 500 includes code 510 defining customer, booking, ticket, seat, and payment entities. The template 500 does not include the definitions of other entities, such as venue, act, or performance. At least some of these entities can be indirectly accessed through the included entities, such as where a ticket may also have attributes referring to a particular performance.

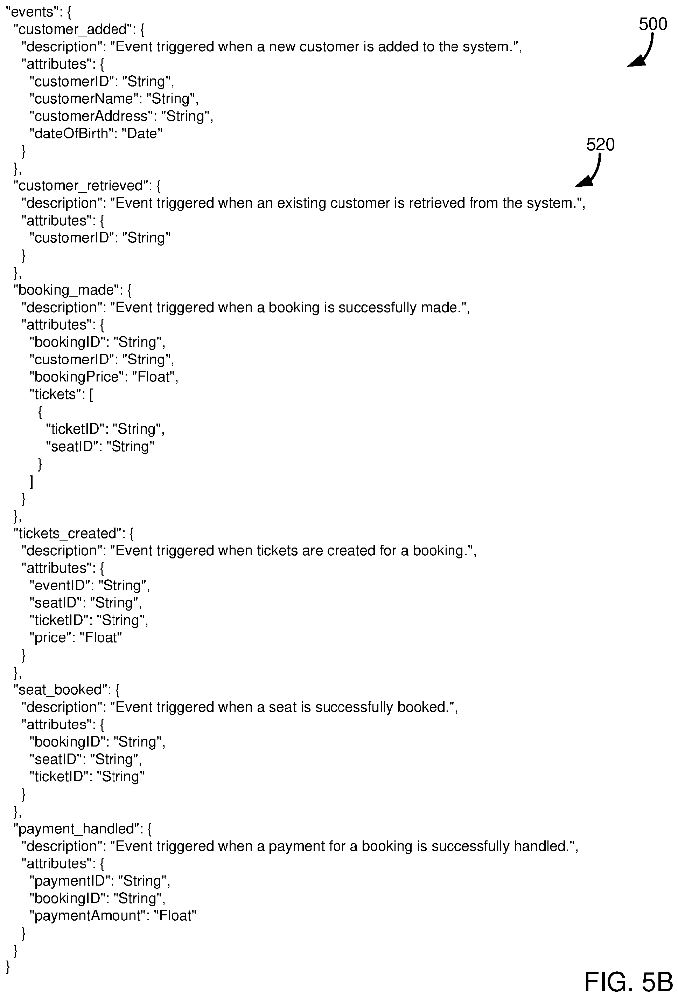

FIG. 5B includes code 520 that defines events associated with the make booking process. Again, the events are those that are used in the make booking process, at least in some variants, and so may not include other events, such as "book act" which are more directly associated with a different process, which may have its own template.

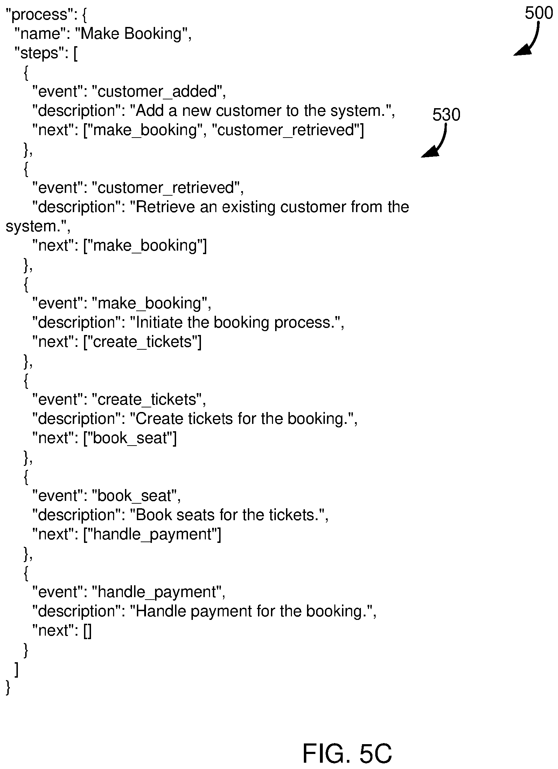

Unlike the JSON listing 400 that focused on entities and events, the example template includes a process defined by code 530 of FIG. 5C. The code 530 specifies particular events, and a particular sequence in which the events occur. That is, the sequence can correspond to a main "expected" path in executing the process. In more complex cases, a template can specify process variants, such as including definitions similar to the code 530 for each variant, or by defining one or more primary process paths can then defining conditions where a different path may be taken, and subsequent events.

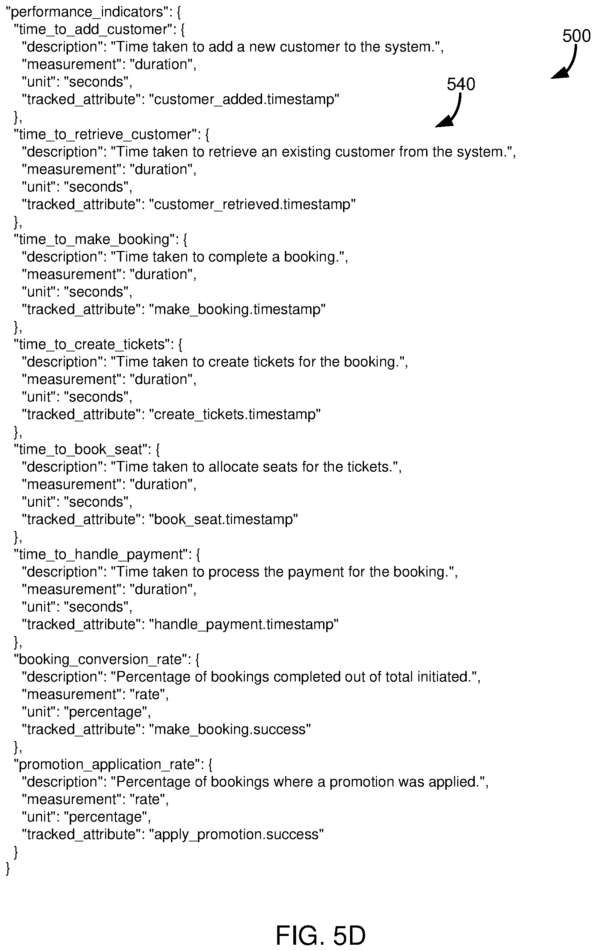

The JSON listing 500, in FIG. 5D, includes code 540 specifying various performance indicators. As with the domain model and domain element model, a process template can express elements at a more general level, and elements of the process template can be linked to other computer implementation artifacts that implement the relevant functionality. For example, a performance metric can be associated with an object in a virtual data model (such as a CDS view in technologies of SAP SE, of Walldorf, Germany). A virtual data model object can be mapped to various database objects, and can be used to retrieve data from such objects and perform relevant calculations to determine the performance metric.

As can be seen in the example, an organization interested in promotions and querying their success will require additional data points from the system and, thus, will have to extend the domain model and the event domain model. The domain model will require a promotion object, while the event domain model must reflect the usage of such a promotion as part of the booking process. According to disclosed techniques, such modifications can be detected and analyzed for inclusion in a standard template, where the enhancements can then be used by other organizations.

### Example 3- Example Data Extraction and Analysis

As discussed, in at least some scenarios, organizations may be able to customize a process template, which can be associated with other changes, such as changes to a domain model or an event domain model. The changes can also be associated with lower-level computing code or objects, such as adding new tables or new table columns corresponding to aspects of the template. In other scenarios, lower-level computer implementation artifacts can be modified first by an organization, where the organization then modifies a template that relates to those modifications.

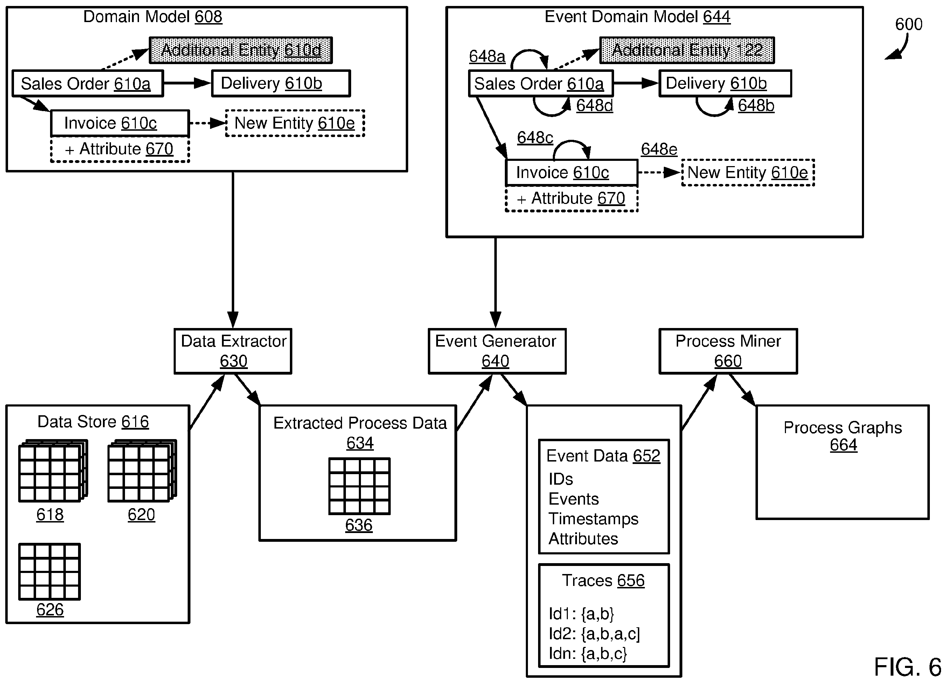

FIG. 6 illustrates an environment 600 for customizing a template and related computer implementation artifacts. The environment 600 includes a domain model 608. In this case, the domain model 608 represents a sales scenario with entities 610, shown as including a sales order entity 610a, a delivery entity 610b, and an invoice entity 610c. The domain model 608 can be similar to the domain model 100 of FIG. 1, in that attributes can be defined for the entities 610, and relationships can be defined between the entities.

The entities 610 are mapped to elements of a data store 616. The data store 616 can include standard tables 618 and, optionally, custom tables 620. Standard tables 618 can be tables that are provided with a base version of a software application, for which a standard process template (or a set of process templates, for various processes of the software application) are provided. The standard tables 618 can be modified to include custom columns for particular organizations, which again be correlated with a domain model or other implementation artifacts.

The data store 616 can also include implementation artifacts that record data changes associated with the standard tables 618 or the custom tables 620. These implementation artifacts can include logs or change tables, where a change table 626 is illustrated in FIG. 6.

A data extractor 630 extracts data from the data store 616, such as from the change table 626. The data extractor 630 can be configured based on the domain model 608. For example, the data extractor 630 can be mapped to particular tables or particular columns of particular tables for the data store 616.

As an example, a simple domain model object/element can be represented as:

```
       @ObjectModel: {
         entityCustomer: {
           name: 'Customer',
           query: 'ZCustomerView'
       } }
```

In this example, the "query" refers to an object in a virtual data model, such as a CDS view in technologies of SAP SE, of Walldorf, Germany. In turn, the CDS view can be defined as:

```
       @AbapCatalog.sqlViewName: 'ZCUSTOMER_VIEW'
       @AbapCatalog.compiler.compareFilter: true
       @AccessControl.authorizationCheck: #CHECK
       @EndUserText.label: 'Customer View'
       define view ZCustomerView as select from kna1 as Customer {
         key Customer.Kunnr as CustomerID,
         Customer.Name1 as FirstName,
         Customer.Name2 as LastName,
         Customer.Email
       }
```

It can be seen that the view is mapped to a table, kna1, in the database, which has columns corresponding to the attributes (such as FirstName, LastName) of the view.

Extracted process data 634 can be associated with a defined structure, such as one or more tables 636. The one or more tables 636 can include table or table elements (such as table columns) that correspond to aspects of the customized domain model 608.

The extracted process data 634, including the one or more tables 636, can be processed by an event generator 640. The event generator 640 can identify the occurrence of events in the process specification, including based on events of an event domain model 644. Like the domain model 608, the event domain model 644 can be modified to include new events, which can be based on added tables or columns of the data store 616, or which can be defined with respect to standard tables 618, but where the event definition differs from a "default" event definition associated with a template provided with the software application or a new event for entities included in such template.

The event domain model 644 is shown as including several standard events 648, such as an event 648a to create a sales order, an event 648b to create a delivery, and an event 648c to create an invoice. The events 648 can be associated with definitions as for the event domain model 300 of FIG. 3, and can be associated with queries to identify events in the extracted process data 634, such as described with respect to FIG. 3. The event generator 640 can provide data in an event table 652, which can include information such as an event identifier, an event type, an event timestamp, and event attributes. The event generator 640 can also produce traces 656. Traces 656 can represent particular paths, sequences of particular events, that were involved for a particular execution of the process.

A process miner 660 can use event data, such as information of the event table 652 or the traces 656 to provide process graphs 664. In some cases, a process graph 664 can represent all observed events, and sequencing events, that were observed in event information. A process graph 660 can provide information about the relative frequency of paths and their timing properties, as well as providing information regarding performance metrics associated with the process overall, as well as for particular process variants.

Performance metrics can be defined in a template, as described, and can be customized by particular organizations. In some implementations, performance metrics can be calculated in association with operations by the event generator 640 or by the process miner 660.

Information regarding processes can be analyzed and presented to organizations in a variety of ways, including to convey performance metrics and benchmark information. As a template is modified, and potentially a domain model or an event domain model, user interface controls can be added or modified, such as to alter a query that retrieves information from the data source 616, the event table 652, the traces 656, or information associated with the process graphs 660.

FIG. 6 also illustrates how organizations can customize templates. For example, the domain model 608 is shown as including an additional entity 610d in the domain model, which can be a standard table 618 that was not previously used in the domain model. For the invoice domain element 610c, a new attribute 670 has been included in the domain model 608. That is, inclusion of the invoice entity 610 is part of a standard template, but the attribute 670 is not referenced by the standard version of the domain model that is part of a template. The attribute 670 can represent an attribute of a standard table 618, or can represent an attribute that was added to a standard table. The domain model 608 also include a new entity 610e, where the new entity can be defined with respect to a custom table 620, but may also reference standard tables 618.

In determining customizations to the domain model 610, versions of the domain model 608 can be compared, which can include analyzing definitions of the domain model as explained with respect to domain model FIG. 2, the code representations of the domain model in FIGS. 4A-4D, or the code representation of the template in FIGS. 5A-5D. For example, the definitions can be represented as a tuple, such as including elements of an object, a field of the table that is used by the object, and the table associated with that field.

FIG. 6 also illustrates how the event domain model can be customized, such as by introducing additional events 648d and 648e. In some cases, customizations can be identified by comparing events in the standard event domain model with those in a customized event domain model, which can identify added events, or standard events whose definition (such as with respect to data in the extracted process data 634, such as query of the process specification) has been modified.

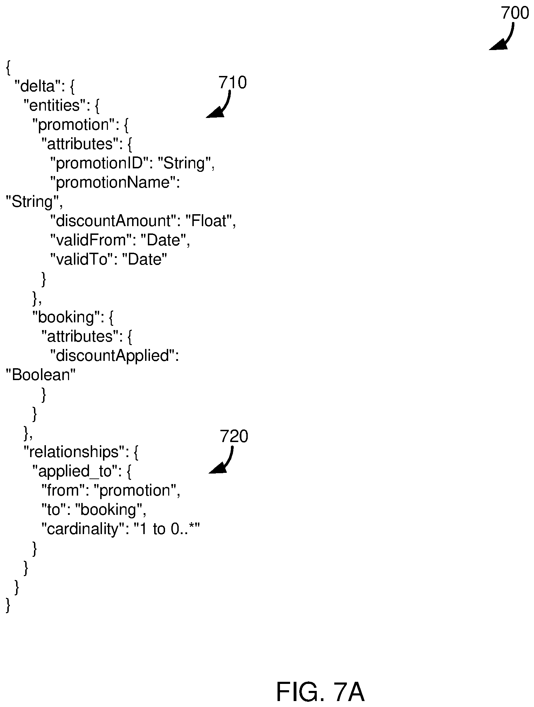

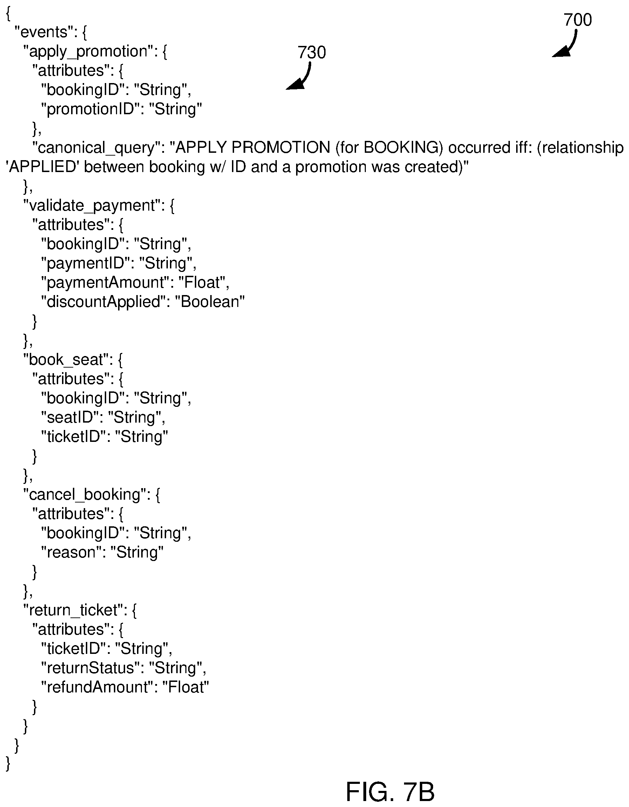

FIGS. 7A and 7B provide example code 700 that includes a section 710 identifying new or changed entities, a section 720 defining new or changed relationships, and section 730 (in FIG. 7B) identifying new or changed events. Disclosed techniques can evaluate these changes for inclusion in an updated version of a standard template, or otherwise providing updates to other organizations.

As will be further described, even for events that are defined solely with respect to standard tables 618, an event may be given different names/labels, which, just based on this name, can make it difficult to determine whether two organizations introduced the same (semantically identical) event, or modified a standard event in the same way. Accordingly, queries that identify events, such as those used by the event generator can be compared for semantic equivalence. This comparison can be performed since the queries refer to standard tables 618 and elements thereof, even if labels applied to events or event elements may change, and even if the queries are not identical (but are semantically equivalent).

### Example 4- Example Determination of Semantically Equivalent Events

Example 3 discussed how template customizations can be determined. However, in at least some cases, it may be desirable to update a standard template to include customizations, at least when the customizations satisfy particular criteria. For example, it may be desirable to add customizations when enough organizations (such as particular companies, government organizations, etc., which can be customers of a software company that provides the template as well as the software associated with the template) have made the customization, or a semantically equivalent customization.

Various rules can be defined to determine when customizations are semantically equivalent. For example, semantic equivalence can be indicated if two event definitions use the same input fields from organization data (such tables in the data store 615 of FIG. 6). Rules can additionally check whether any data constraints are the same between events. For example, an event may specify that, for a table attribute, only certain values should be used in the event definition. Operators in the event definition can also be used in determining equivalence. For example, for a SQL statement, the rules can determine whether statement elements are related by a AND condition or an OR condition.

An example portion of a query language statement illustrating how the rules can be evaluated is:
path.tableName = 'VTCQ'
AND VTCQ.field1 = 'B'
AND path.fnName = 'SOID'
Other event definitions (such as queries for determining whether an event occurred in a dataset) can be considered semantically equivalent if the contained query is asking for the same occurrence. Such a query can be based on several logic statements concatenated via AND or OR.

Each of the logic statements includes a reference to a specific table and a (set of) columns thereof, and interpreting the value in the column(s) in a dedicated way. For instance, the statement VTCQ.field1 = "B" reduces the amount of matches to only those for which this field contains this one value. Thus, two events are considered semantically equivalent if and only if they query the same table and fields - if they expect to find the same values (i.e., interpret the content the same way) and concatenate these logic statements the same way according to computational logic (e.g., two terms of an AND statement can be switched without changing the meaning of the overall statement).

Note that some metadata for computing artifacts is not used for determining equivalence, such as if differences in metadata is not indicative of semantic difference. For example, two fields in a domain object may have different names, even though they correspond to the same field identifier (identifying the same field of the same table). Two organizations may define the same event, but may speak different languages. Although the human-readable description of various events (such as an event name) and event components may be in different languages, the events would refer to the same implantation artifacts and elements thereof (like tables and table columns).

Determining that two events are equivalent can also involve considering the nature of the operations or the order of the operations. For example, if multiple selection/filter criteria are used in an event definition, the order in which the criteria are applied may not affect the result. Similarly, an event definition can have checks to see that selections are "distinct." In some cases, a combined distinct operation can be used, while in other cases multiple separate distinct checks can be specified. Whether the distinct operations are combined or separate may not affect the results - the events identified in a set of process data. Logical operators such as AND and OR can also be evaluated, where typically the operators need to be identical for identical operands in order for two queries to be semantically equivalent.

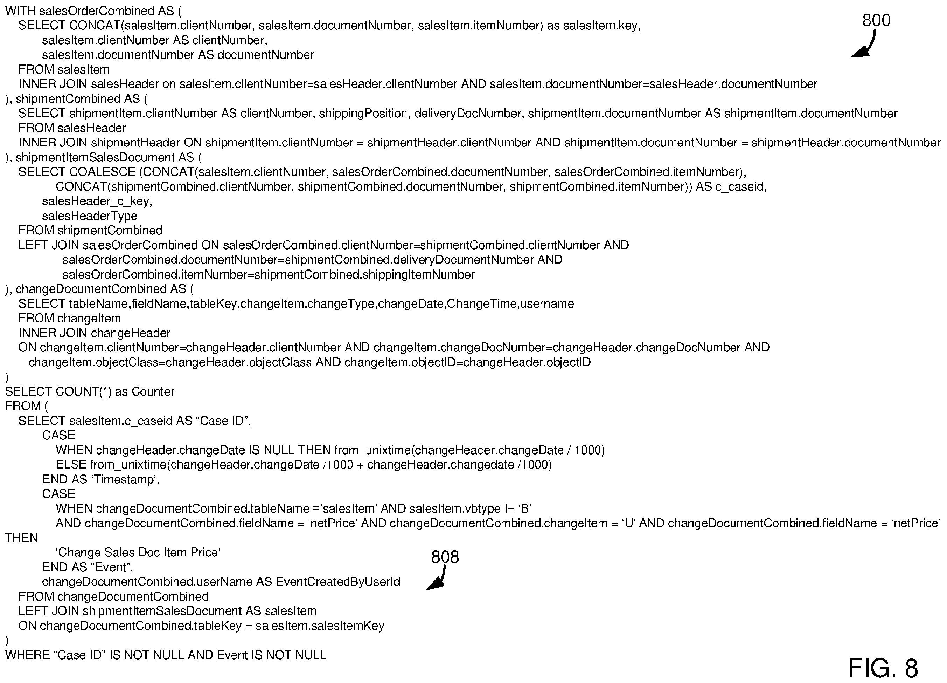

FIG. 8 provides an example query 800 that retrieves data from standard tables and change logs to identify events. In particular, the event is a change in the item price in a sales document. It can be seen that the query 800 access tables such salesItem, salesHeader, changeItem, changeHeader, shipmentItem, and shipmentHeader. The query 800 accesses specific fields of those tables, such as fields representing a client number, a sales item document number, a shipment item document number, and shipping position. The query 800 also includes code 808 that defines an event. The code 808 specifies particular values for particular attributes, the event is deemed to have occurred if the values are satisfied.

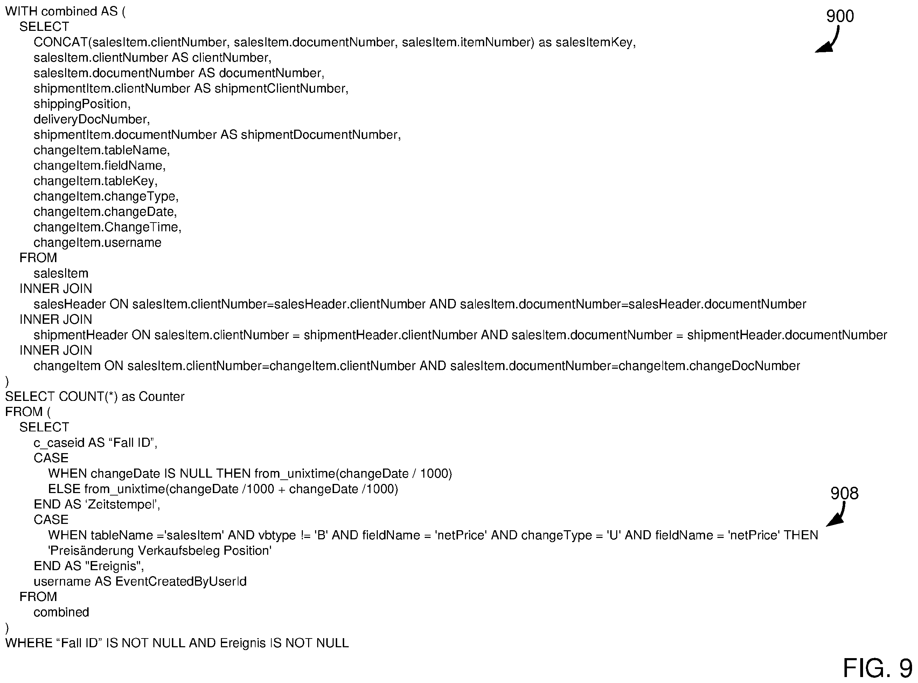

FIG. 9 illustrates a query 900. The query 900 is in a different form than the query 800, but provides the same results, including providing the same event definition at code 908. The queries 800 and 900 can be confirmed to be equivalent, including by determining that the queries access the same tables and the same table columns, using the same selection conditions, the same content interpretations, and the same event definition.

Other template information, such as performance metrics or UI "widgets", can be analyzed in a similar manner to determine whether new performance metrics, or updated definitions of performance metrics, are semantically equivalent.

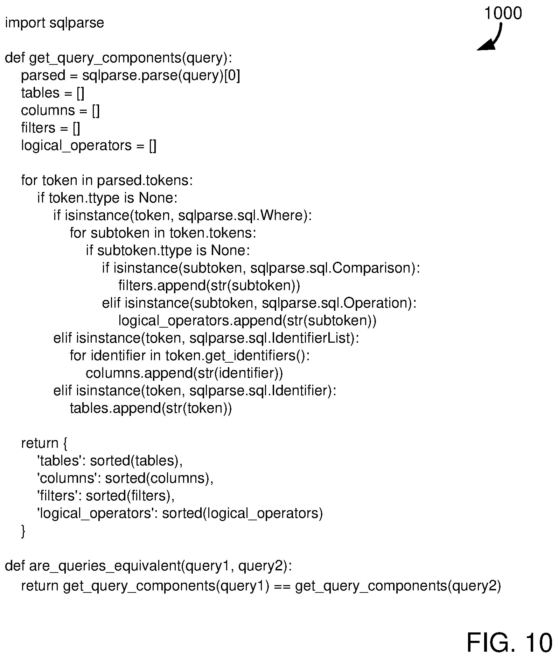

FIG. 10 provides example Python code 1000 that can be used to determine whether queries are semantically equivalent, at least in terms of the operators, tables, columns, and filters used in the query. The Python code 1000 uses the publicly available sqlparse library, which tokenizes/categorizes query elements. The equality operator checks to see whether the components of the queries are the same, but the components do not need to appear in the same order for equivalence.

Query equivalence can be evaluated in other, or additional ways, such as by determining empirical equivalence. Empirical equivalence can involve executing different queries on the same dataset and determining whether they produce the same results. For example, empirical equivalence can be determined by running the same metric calculation on the same 10,000 sales order items in a database.

Query optimizers can be used in determining equivalence, such as by evaluating an explain plan for a query. In some cases, different queries can be submitted to a query optimizer, where the query optimizer will generate the same query plan even though the input queries differed.

Natural Language Generators, such as Large Language Models (LLM), can also be used to determine query equivalence. For example, two queries can be submitted to an LLM for analysis. Information about queries, such as their explain plans, can also be provided to an LLM for use in determining semantic equivalence.

### Example 5 - Example User Interface for Template Update

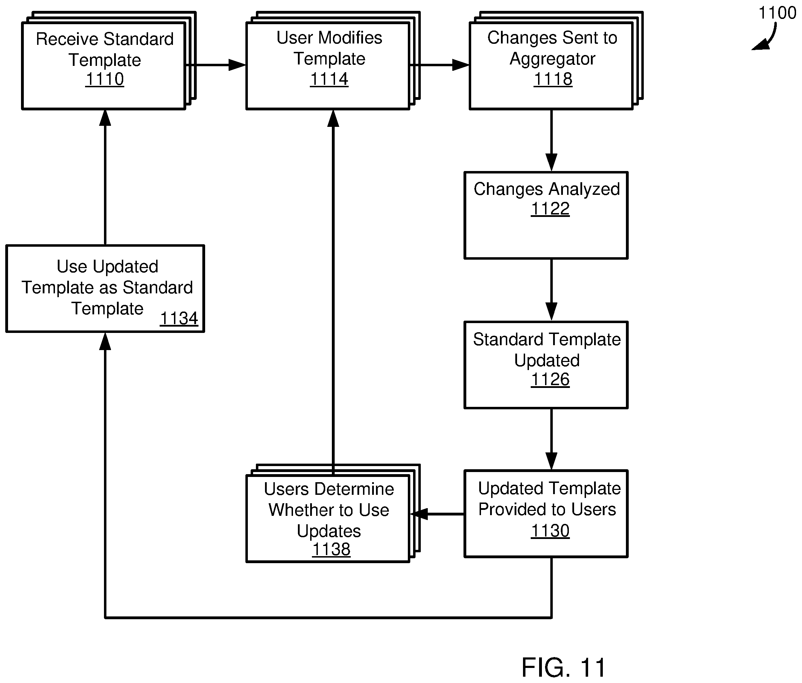

FIG. 11 is a flowchart of a process 1100 according to the present disclosure. Organizations receive a standard template at 1110, where the template can be as previously described, such as including domain models, event domain models, and associated computer implementation artifacts, such as queries to retrieve data to be used for event generation or queries use for event generation. Organizations modify the standard template at 1114. Modifying the template can include adding or altering event definitions, or modifying how performance metrics are calculated.

Changes from the organizations are sent to an aggregator at 1118. Sending changes to the aggregator can include sending template information to the aggregator, where the aggregator can identify changes in the template information. Alternatively, changes can be determined in a process of the organization, and the changes are sent to the aggregator. Changes of the organization can be logged and sent at 1118 in some implementations. In other implementations, two versions of a template can be compared, and changes, such as modified or added event definitions, determined.

In some cases, a standard template and organization modifications can be part of a common repository, such as software version control or source code management system. New branches/forks can be created when an organization modifies a template, and the version control/source code management system can be used to identify template changes.

The aggregated changes are analyzed at 1122. Analyzing the changes at 1122 can include determining whether the changes are semantically equivalent. As described, analyzing changes can include determining whether an organization-modified template includes new or updated event definitions or new or updated performance metrics.

The standard template is updated at 1126. Updating the standard template can include changing event or performance metric definitions or adding new event or performance metric definitions. Updated templates can be provided to organizations at 1130, which can include setting the template updated at 1126 as the new standard template at 1334.

Analyzing the changes at 1122 and updating the template at 1126 can take into account characteristics of different organizations. For example, a threshold can be set that a change will be adopted if a certain percentage of organizations adopted a semantically equivalent change. However, this information can be evaluated on a more granular level, considering different characteristics of organizations. For example, a particular change might be below a threshold considering organizations as an entire group, but may exceed the threshold if considering organizations in the same line of business. In this scenario, updates can be suggested to this specific subgroup of organizations.

Other criteria can be used in determining whether to include a customization in a standard template, such as the number of events. That is, if a standard template includes fewer events, a lower threshold for inclusion may be set than if the standard template includes a larger number of events. This can reflect, for example, that customizations where a large number of events already exist may be more specific to a particular organization, whereas an added or modified event may be considered more "fundamental" if the template includes relatively few events.

When multiple semantically equivalent updates have been found, a particular version of the update to include in the standard template can be selected. In some cases, performance of the updates, such as query execution time or computing resource use, can be determined. A more performant version of the update can be selected for inclusion in the standard template.

Organizations can determine whether they wish to use updates in an updated template at 1138. For example, some organizations may have their own template changes that overlap, and potentially conflict with, those in the updated template. If an organization wishes to make updates, they can be present with a suggested path to perform the update, or the update can be made automatically for them. Since template changes are reflected in code, the update path can be provided as code to be added or changed in the current template code base of the organization, such as using a software version control system or source code management system.

FIG. 11 also provides a comparison between disclosed techniques and typical process mining scenarios. That is, in existing process mining scenarios, an organization may be provided with a standard template 1110, and may, for example, hire consultants to modify the template at 1114. However, the process typically stops after 1114. The organization may not further update the template because of the associated time/expense. Further, the organization is typically unaware of how other organizations may have modified their processes at 1114, and are thus unable to take advantage of template improvements. Further, as previously noted, as process templates diverge as part of the modifications at 1114, benchmarks may become unusable or unreliable.

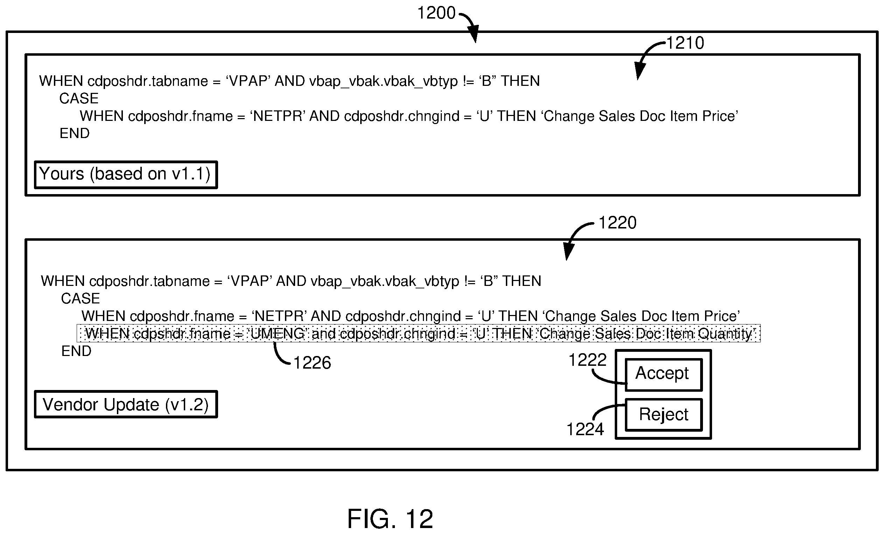

FIG. 12 provides an example user interface 1200 that displays a proposed template update/migration path to a user (such as a user associated with an organization that uses a process mining template). The user interface 1200 provides a display 1210 of an original version of a template, and a display 1220 of a corresponding portion of an updated template. The display 1220 can include user interface elements 1222, 1224 that allow a user to accept or reject the change. The display 1210 or the display 1220 can be configured to highlight changes, such as highlighting the additional event definition 1226 in the display 1220.

A similar user interface can be provided that highlights differences between a customization already made by an organization and a suggested change based on changes of other organizations. For example, a user interface can display a standard template with highlighted changes made by an organization, and then provide a suggested change based on changes of other organizations, where the suggested change can then be accepted or rejected.

### Example 6- Example Operations

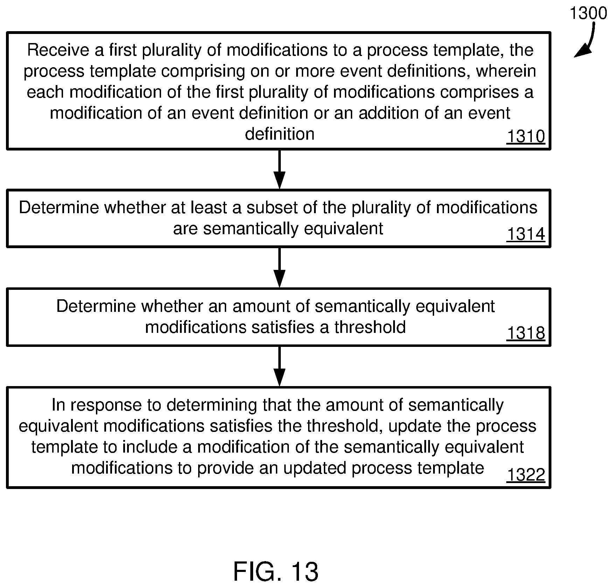

FIG. 13 provides a process 1300 of generating an updated process template by processing modifications, such as made by organizations, to a process template, such as a standard process template, to provide an updated version of the standard process template. At 1310, a first plurality of modifications to a process template are received. The process template includes one or more event definitions. Each modification of the first plurality of modifications includes a modification of an event definition or an addition of an event definition.

It is determined at 1314 whether at least a subset of the plurality of modifications are semantically equivalent. At 1318, it is determined whether an amount of semantically equivalent modifications satisfies a threshold.

At 1322, in response to determining that the amount of semantically equivalent modifications satisfies the threshold, the process template is updated to include a modification of the semantically equivalent modifications to provide an updated process template.

### Example 7- Additional Examples

Example 1 provides a computing system that includes at least one memory, one or more hardware processing units coupled to the at least one memory, and one or more computer-readable storage media. The storage media store computer-executable instructions that, when executed, cause the computing system to perform various operations.

The operations include receiving a first plurality of modifications to a process template. The process template includes one or more event definitions, and each modification of the first plurality of modifications includes a modification of an event definition or an addition of an event definition. The operations also include determining whether at least a subset of the plurality of modifications are semantically equivalent, determining whether an amount of semantically equivalent modifications satisfies a threshold, and in response to determining that the amount of semantically equivalent modifications satisfies the threshold, updating the process template to include a modification of the semantically equivalent modifications to provide an updated process template.

Example 2 is the computing system of Example 1, where an event definition includes, or is associated with, a query of one or more data artifacts.

Example 3 is the computing system of Example 2, where determining whether at least a subset of the first plurality of modifications are semantically equivalent includes determining data artifact attributes accessed by the query.

Example 4 is the computing system of Example 3, where determining whether at least a subset of the modifications are semantically equivalent includes determining selection conditions associated with the data artifact attributes accessed by the query.

Example 5 is the computing system of any of Examples 2-4, where determining whether at least a subset of the modifications are semantically equivalent includes executing a first query of a first modified or added event definition and determining first query results, executing a second query of a second modified or added definition and determining second query results, and comparing the first query results and the second query results.

Example 6 is the computing system of any of Examples 1-5, where the operations further comprise sending the updated process template, or updates to the updated process template, to an organization.

Example 7 is the computing system of any of Examples 1-6, where the process template defines a selection of data and a modification of a second plurality of modifications modifies the selection of data.

Example 8 is the computing system of Example 7, where the modification of the second plurality of modifications selects an attribute used in a modification of an event definition or an added event definition in the first plurality of modifications.

Example 9 is the computing system of any of Examples 1-8, where determining whether the amount of semantically equivalent modifications satisfies the threshold includes determining a number of events defined in the template.

Example 10 is the computing system of Example 9, where the threshold is lower for templates that include a lower number of events than for templates that include a higher number of events.

Example 11 is the computing system of any of Examples 1-10, where determining whether the amount of semantically equivalent modifications satisfies the threshold includes determining one or more characteristics of respective clients associated with respective modifications of the first plurality of modifications and the threshold is with respect to clients having a common characteristic value.

Example 12 is the computing system of Example 11, where the operations further include sending the updated process template, or updates to the updated process template, to clients having the common characteristic value.

Example 13 is the computing system of any of Examples 1-12, where the template includes a domain model, the domain model being operationally linked to one or more computer implementation artifacts storing data for entities represented in the domain model.

Example 14 is the computing system of any of Examples 1-13, where updating the process template to include a modification of the semantically equivalent modifications to provide an updated process template includes evaluating performance of the semantically equivalent modifications and selecting a more performant modification of the semantically equivalent modifications to include in the updated process template.

Example 15 provides a method, implemented in a computing system that includes at least one memory and one or more hardware processing units coupled to the at least one memory. The method includes receiving a first plurality of modifications to a process template, where the process template comprises one or more event definitions. Each modification of the first plurality of modifications includes a modification of an event definition or an addition of an event definition. The method also includes determining whether at least a subset of the plurality of modifications are semantically equivalent, determining whether an amount of semantically equivalent modifications satisfies a threshold, and in response to determining that the amount of semantically equivalent modifications satisfies the threshold, updating the process template to include a modification of the semantically equivalent modifications to provide an updated process template.

Example 16 is the method of Example 15, where an event definition comprises, or is associated with, a query of one or more data artifacts. Determining whether at least a subset of the first plurality of modifications are semantically equivalent includes determining data artifact attributes accessed by the query.

Example 17 is the method of Example 15 or Example 16, where the template includes a domain model. The domain model is operationally linked to one or more computer implementation artifacts storing data for entities represented in the domain model.

Example 18 provides one or more non-transitory computer-readable storage media. The one or more non-transitory computer-readable storage media include computer-executable instructions that, when executed by a computing system that includes at least one memory and at least one hardware processor coupled to the at least one memory, cause the computing system to receive a first plurality of modifications to a process template. The process template includes one or more event definitions, and each modification of the first plurality of modifications includes a modification of an event definition or an addition of an event definition.

The computer-executable instructions also cause the computing system to determine whether at least a subset of the plurality of modifications are semantically equivalent, determine whether an amount of semantically equivalent modifications satisfies a threshold, and in response to determining that the amount of semantically equivalent modifications satisfies the threshold, update the process template to include a modification of the semantically equivalent modifications to provide an updated process template.

Example 19 is the one or more non-transitory computer-readable storage media of Example 18, where an event definition includes, or is associated with, a query of one or more data artifacts. The computer-executable instructions that cause the computing system to determine whether at least a subset of the first plurality of modifications are semantically equivalent include computer-executable instructions that, when executed by the computing system, cause the computing system to determine data artifact attributes accessed by the query.

Example 20 is the one or more non-transitory computer-readable storage media of Example 18 or Example 19, where the template includes a domain model. The domain model is operationally linked to one or more computer implementation artifacts storing data for entities represented in the domain model.

### Example 8 - Computing Systems

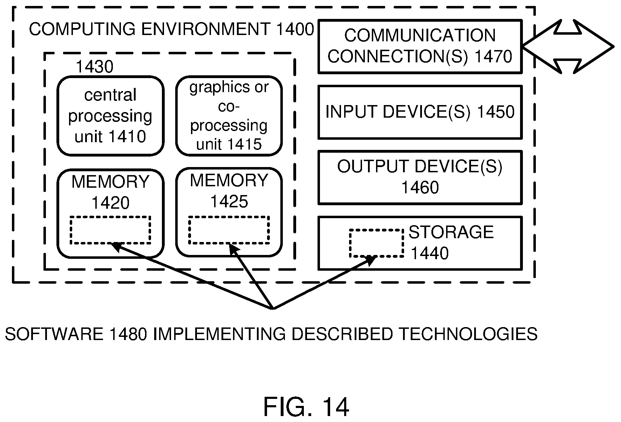

FIG. 14 depicts a generalized example of a suitable computing system 1400 in which the described innovations may be implemented. The computing system 1400 is not intended to suggest any limitation as to scope of use or functionality of the present disclosure, as the innovations may be implemented in diverse general-purpose or special-purpose computing systems.

With reference to FIG. 14, the computing system 1400 includes one or more processing units 1410, 1415 and memory 1420, 1425. In FIG. 14, this basic configuration 1430 is included within a dashed line. The processing units 1410, 1415 execute computer-executable instructions, such as for implementing technologies described in Examples 1-7. A processing unit can be a general-purpose central processing unit (CPU), processor in an application-specific integrated circuit (ASIC), or any other type of processor. In a multiprocessing system, multiple processing units execute computer-executable instructions to increase processing power. For example, FIG. 14 shows a central processing unit 1410 as well as a graphics processing unit or co-processing unit 1415. The tangible memory 1420, 1425 may be volatile memory (e.g., registers, cache, RAM), non-volatile memory (e.g., ROM, EEPROM, flash memory, etc.), or some combination of the two, accessible by the processing unit(s) 1410, 1415. The memory 1420, 1425 stores software 1480 implementing one or more innovations described herein, in the form of computer-executable instructions suitable for execution by the processing unit(s) 1410, 1415.

A computing system 1400 may have additional features. For example, the computing system 1400 includes storage 1440, one or more input devices 1450, one or more output devices 1460, and one or more communication connections 1470. An interconnection mechanism (not shown) such as a bus, controller, or network interconnects the components of the computing system 1400. Typically, operating system software (not shown) provides an operating environment for other software executing in the computing system 1400, and coordinates activities of the components of the computing system 1400.

The tangible storage 1440 may be removable or non-removable, and includes magnetic disks, magnetic tapes or cassettes, CD-ROMs, DVDs, or any other medium which can be used to store information in a non-transitory way, and which can be accessed within the computing system 1400. The storage 1440 stores instructions for the software 1480 implementing one or more innovations described herein.

The input device(s) 1450 may be a touch input device such as a keyboard, mouse, pen, or trackball, a voice input device, a scanning device, or another device that provides input to the computing system 1400. The output device(s) 1460 may be a display, printer, speaker, CD-writer, or another device that provides output from the computing system 1400.

The communication connection(s) 1470 enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier.

The innovations can be described in the general context of computer-executable instructions, such as those included in program modules, being executed in a computing system on a target real or virtual processor. Generally, program modules or components include routines, programs, libraries, objects, classes, components, data structures, etc. that perform particular tasks or implement particular abstract data types. The functionality of the program modules may be combined or split between program modules as desired in various embodiments. Computer-executable instructions for program modules may be executed within a local or distributed computing system.

The terms "system" and "device" are used interchangeably herein. Unless the context clearly indicates otherwise, neither term implies any limitation on a type of computing system or computing device. In general, a computing system or computing device can be local or distributed, and can include any combination of special-purpose hardware and/or general-purpose hardware with software implementing the functionality described herein.

In various examples described herein, a module (e.g., component or engine) can be "coded" to perform certain operations or provide certain functionality, indicating that computer-executable instructions for the module can be executed to perform such operations, cause such operations to be performed, or to otherwise provide such functionality. Although functionality described with respect to a software component, module, or engine can be carried out as a discrete software unit (e.g., program, function, class method), it need not be implemented as a discrete unit. That is, the functionality can be incorporated into a larger or more general-purpose program, such as one or more lines of code in a larger or general-purpose program.

For the sake of presentation, the detailed description uses terms like "determine" and "use" to describe computer operations in a computing system. These terms are high-level abstractions for operations performed by a computer, and should not be confused with acts performed by a human being. The actual computer operations corresponding to these terms vary depending on implementation.

### Example 9 - Cloud Computing Environment

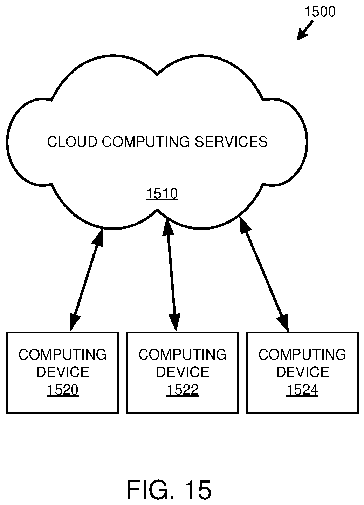

FIG. 15 depicts an example cloud computing environment 1500 in which the described technologies can be implemented. The cloud computing environment 1500 comprises cloud computing services 1510. The cloud computing services 1510 can comprise various types of cloud computing resources, such as computer servers, data storage repositories, networking resources, etc. The cloud computing services 1510 can be centrally located (e.g., provided by a data center of a business or organization) or distributed (e.g., provided by various computing resources located at different locations, such as different data centers and/or located in different cities or countries).

The cloud computing services 1510 are utilized by various types of computing devices (e.g., client computing devices), such as computing devices 1520, 1522, and 1524. For example, the computing devices (e.g., 1520, 1522, and 1524) can be computers (e.g., desktop or laptop computers), mobile devices (e.g., tablet computers or smart phones), or other types of computing devices. For example, the computing devices (e.g., 1520, 1522, and 1524) can utilize the cloud computing services 1510 to perform computing operators (e.g., data processing, data storage, and the like).

### Example 10 - Implementations

Although the operations of some of the disclosed methods are described in a particular, sequential order for convenient presentation, it should be understood that this manner of description encompasses rearrangement, unless a particular ordering is required by specific language set forth below. For example, operations described sequentially may in some cases be rearranged or performed concurrently. Moreover, for the sake of simplicity, the attached figures may not show the various ways in which the disclosed methods can be used in conjunction with other methods.

Any of the disclosed methods can be implemented as computer-executable instructions or a computer program product stored on one or more computer-readable storage media, such as tangible, non-transitory computer-readable storage media, and executed on a computing device (e.g., any available computing device, including smart phones or other mobile devices that include computing hardware). Tangible computer-readable storage media are any available tangible media that can be accessed within a computing environment (e.g., one or more optical media discs such as DVD or CD, volatile memory components (such as DRAM or SRAM), or nonvolatile memory components (such as flash memory or hard drives)). By way of example, and with reference to FIG. 14, computer-readable storage media include memory 1420 and 1425, and storage 1440. The term computer-readable storage media does not include signals and carrier waves. In addition, the term computer-readable storage media does not include communication connections (e.g., 1470).

Any of the computer-executable instructions for implementing the disclosed techniques as well as any data created and used during implementation of the disclosed embodiments can be stored on one or more computer-readable storage media. The computer-executable instructions can be part of, for example, a dedicated software application or a software application that is accessed or downloaded via a web browser or other software application (such as a remote computing application). Such software can be executed, for example, on a single local computer (e.g., any suitable commercially available computer) or in a network environment (e.g., via the Internet, a wide-area network, a local-area network, a client-server network (such as a cloud computing network), or other such network) using one or more network computers.

For clarity, only certain selected aspects of the software-based implementations are described. Other details that are well known in the art are omitted. For example, it should be understood that the disclosed technology is not limited to any specific computer language or program. For instance, the disclosed technology can be implemented by software written in C, C++, C#, Java, Perl, JavaScript, Python, R, Ruby, ABAP, SQL, XCode, GO, Adobe Flash, or any other suitable programming language, or, in some examples, markup languages such as html or XML, or combinations of suitable programming languages and markup languages. Likewise, the disclosed technology is not limited to any particular computer or type of hardware. Certain details of suitable computers and hardware are well known and need not be set forth in detail in this disclosure.

Furthermore, any of the software-based embodiments (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, software applications, cable (including fiber optic cable), magnetic communications, electromagnetic communications (including RF, microwave, and infrared communications), electronic communications, or other such communication means.
The following numbered clauses represent contemplated embodiments.
1. A computing system comprising:
   at least one memory;
   one or more hardware processing units coupled to the at least one memory; and
   one or more computer readable storage media storing computer-executable instructions that, when executed, cause the computing system to perform operations comprising:
      receiving a first plurality of modifications to a process template, the process template comprising on or more event definitions, wherein each modification of the first plurality of modifications comprises a modification of an event definition or an addition of an event definition;
      determining whether at least a subset of the plurality of modifications are semantically equivalent;
      determining whether an amount of semantically equivalent modifications satisfies a threshold; and
      in response to determining that the amount of semantically equivalent modifications satisfies the threshold, updating the process template to include a modification of the semantically equivalent modifications to provide an updated process template.
2. The computing system of claim 1, wherein an event definition comprises, or is associated with, a query of one or more data artifacts.
3. The computing system of claim 2, wherein determining whether at least a subset of the first plurality of modifications are semantically equivalent comprises:
   determining data artifact attributes accessed by the query.
4. The computing system of claim 3, wherein determining whether at least a subset of the modifications are semantically equivalent comprises:
   determining selection conditions associated with the data artifact attributes accessed by the query.
5. The computing system of claim 2, wherein determining whether at least a subset of the modifications are semantically equivalent comprises:
   executing a first query of a first modified or added event definition and determining first query results;
   executing a second query of a second modified or added definition and determining second query results; and
   comparing the first query results and the second query results.
6. The computing system of claim 1, the operations further comprising:
   sending the updated process template, or updates to the updated process template, to an organization.
7. The computing system of claim 1, wherein the process template defines a selection of data and a modification of a second plurality of modifications modifies the selection of data.
8. The computing system of claim 7, where the modification of the second plurality of modifications selects an attribute used in a modification of an event definition or an added event definition in the first plurality of modifications.
9. The computing system of claim 1, wherein determining whether the amount of semantically equivalent modifications satisfies the threshold comprises determining a number of events defined in the template.
10. The computing system of claim 9, where the threshold is lower for templates that comprise a lower number of events than for templates that comprise a higher number of events.
11. The computing system of claim 1, wherein determining whether the amount of semantically equivalent modifications satisfies the threshold comprises determining one or more characteristics of respective clients associated with respective modifications of the first plurality of modifications and the threshold is with respect to clients having a common characteristic value.
12. The computing system of claim 11, the operations further comprising:
   sending the updated process template, or updates to the updated process template, to clients having the common characteristic value.
13. The computing system of claim 1, wherein the template comprises a domain model, the domain model being operationally linked to one or more computer implementation artifacts storing data for entities represented in the domain model.
14. The computing system of claim 1, wherein updating the process template to include a modification of the semantically equivalent modifications to provide an updated process template comprises evaluating performance of the semantically equivalent modifications and selecting a more performant modification of the semantically equivalent modifications to include in the updated process template.
15. A method, implemented in a computing system comprising at least one memory and one or more hardware processing units coupled to the at least one memory, the method comprising:
   receiving a first plurality of modifications to a process template, the process template
   comprising on or more event definitions, wherein each modification of the first plurality of modifications comprises a modification of an event definition or an addition of an event definition;
   determining whether at least a subset of the plurality of modifications are semantically equivalent;
   determining whether an amount of semantically equivalent modifications satisfies a threshold; and
   in response to determining that the amount of semantically equivalent modifications satisfies the threshold, updating the process template to include a modification of the semantically equivalent modifications to provide an updated process template.
16. The method of claim 15, wherein an event definition comprises, or is associated with, a query of one or more data artifacts, and determining whether at least a subset of the first plurality of modifications are semantically equivalent comprises:
   determining data artifact attributes accessed by the query.
17. The method of claim 15, wherein the template comprises a domain model, the domain model being operationally linked to one or more computer implementation artifacts storing data for entities represented in the domain model.
18. One or more non-transitory computer-readable storage media comprising:
   computer-executable instructions that, when executed by a computing system comprising at least one memory and at least one hardware processor coupled to the at least one memory,
   cause the computing system to receive a first plurality of modifications to a process template, the process template comprising on or more event definitions, wherein each modification of the first plurality of modifications comprises a modification of an event definition or an addition of an event definition;
   computer-executable instructions that, when executed by the computing system, cause the computing system to determine whether at least a subset of the plurality of modifications are semantically equivalent;
   computer-executable instructions that, when executed by the computing system, cause the computing system to determine whether an amount of semantically equivalent modifications satisfies a threshold; and
   computer-executable instructions that, when executed by the computing system, cause the computing system to, in response to determining that the amount of semantically equivalent modifications satisfies the threshold, update the process template to include a modification of the semantically equivalent modifications to provide an updated process template.
19. The one or more non-transitory computer-readable storage media of claim 18, wherein an event definition comprises, or is associated with, a query of one or more data artifacts, and the computer-executable instructions that cause the computing system to determine whether at least a subset of the first plurality of modifications are semantically equivalent comprise:
   computer-executable instructions that, when executed by the computing system, cause the computing system to determine data artifact attributes accessed by the query.
20. The one or more non-transitory computer-readable storage media of claim 18, wherein the template comprises a domain model, the domain model being operationally linked to one or more computer implementation artifacts storing data for entities represented in the domain model.
21. Any of the preceding clauses, wherein determining whether at least a subset of the modifications are semantically equivalent comprises evaluating whether respective event definitions access the same input fields and apply the same data constraints to values of those input fields.
22. Clause 21, wherein determining whether the same data constraints are applied comprises determining whether logic statements in respective event definitions reference the same fields of the same tables, use the same comparison values, and are combined using equivalent logical operators.
23. Any of the preceding clauses, wherein a process template comprises one or more event definitions and/or one or more performance metrics, wherein each event definition or performance metric is associated with a query for retrieving or processing data from a data store.
24. Any of the preceding clauses, wherein the process template comprises at least one event definition, the event definition being associated with a query over one or more data artifacts.
25. Any of the preceding clauses, wherein updating the process template comprises modifying a query associated with an event definition within the template.
26. Any of the preceding clauses, wherein determining whether at least a subset of the modifications are semantically equivalent comprises tokenizing corresponding queries into operators and query elements, e.g., tables, columns, filters, used in the queries, and comparing the operators and query elements, e.g., without requiring that the components appear in the same order.
27. Any of the preceding clauses, wherein determining whether at least a subset of the modifications are semantically equivalent comprises executing corresponding queries on a common dataset and determining whether the queries produce the same results.
28. Any of the preceding clauses, wherein updating the process template comprises selecting one of the semantically equivalent modifications for inclusion in the updated process template.
29. Any of the preceding clauses, wherein selecting one of the semantically equivalent modifications comprises evaluating performance characteristics of respective modifications and selecting a modification with superior performance.
30. Any of the preceding clauses, wherein updating the process template comprises changing an existing event or performance metric definition or adding a new event or performance metric definition based on the selected modification.

The disclosed methods, apparatus, and systems should not be construed as limiting in any way. Instead, the present disclosure is directed toward all novel and nonobvious features and aspects of the various disclosed embodiments, alone and in various combinations and sub combinations with one another. The disclosed methods, apparatus, and systems are not limited to any specific aspect or feature or combination thereof, nor do the disclosed embodiments require that any one or more specific advantages be present, or problems be solved.

The technologies from any example can be combined with the technologies described in any one or more of the other examples. **In** view of the many possible embodiments to which the principles of the disclosed technology may be applied, it should be recognized that the illustrated embodiments are examples of the disclosed technology and should not be taken as a limitation on the scope of the disclosed technology. Rather, the scope of the disclosed technology includes what is covered by the scope and spirit of the following claims.

## Claims

1. A computing system comprising:
at least one memory;
one or more hardware processing units coupled to the at least one memory; and
one or more computer readable storage media storing computer-executable instructions that, when executed, cause the computing system to perform operations comprising:
receiving a first plurality of modifications to a process template, the process template comprising on or more event definitions, wherein each modification of the first plurality of modifications comprises a modification of an event definition or an addition of an event definition;
determining whether at least a subset of the plurality of modifications are semantically equivalent;
determining whether an amount of semantically equivalent modifications satisfies a threshold; and
in response to determining that the amount of semantically equivalent modifications satisfies the threshold, updating the process template to include a modification of the semantically equivalent modifications to provide an updated process template.

2. The computing system of claim 1, wherein an event definition comprises, or is associated with, a query of one or more data artifacts.

3. The computing system of claim 2, wherein determining whether at least a subset of the first plurality of modifications are semantically equivalent comprises:
determining data artifact attributes accessed by the query.

4. The computing system of claim 3, wherein determining whether at least a subset of the modifications are semantically equivalent comprises:
determining selection conditions associated with the data artifact attributes accessed by the query.

5. The computing system of any one of claims 2-4, wherein determining whether at least a subset of the modifications are semantically equivalent comprises:
executing a first query of a first modified or added event definition and determining first query results;
executing a second query of a second modified or added definition and determining second query results; and
comparing the first query results and the second query results.

6. The computing system of any one of the preceding claims, wherein the process template defines a selection of data and a modification of a second plurality of modifications modifies the selection of data.

7. The computing system of claim 6, where the modification of the second plurality of modifications selects an attribute used in a modification of an event definition or an added event definition in the first plurality of modifications.

8. The computing system of any one of the preceding claims, wherein determining whether the amount of semantically equivalent modifications satisfies the threshold comprises determining a number of events defined in the template.

9. The computing system of claim 8, where the threshold is lower for templates that comprise a lower number of events than for templates that comprise a higher number of events.

10. The computing system of any one of the preceding claims, wherein determining whether the amount of semantically equivalent modifications satisfies the threshold comprises determining one or more characteristics of respective clients associated with respective modifications of the first plurality of modifications and the threshold is with respect to clients having a common characteristic value.

11. The computing system of claim 10, the operations further comprising:
sending the updated process template, or updates to the updated process template, to clients having the common characteristic value.

12. The computing system of any one of the preceding claims, wherein the template comprises a domain model, the domain model being operationally linked to one or more computer implementation artifacts storing data for entities represented in the domain model.

13. The computing system of any one of the preceding claims, wherein updating the process template to include a modification of the semantically equivalent modifications to provide an updated process template comprises evaluating performance of the semantically equivalent modifications and selecting a more performant modification of the semantically equivalent modifications to include in the updated process template.

14. A method, implemented in a computing system comprising at least one memory and one or more hardware processing units coupled to the at least one memory, the method comprising:
receiving a first plurality of modifications to a process template, the process template comprising on or more event definitions, wherein each modification of the first plurality of modifications comprises a modification of an event definition or an addition of an event definition;
determining whether at least a subset of the plurality of modifications are semantically equivalent;
determining whether an amount of semantically equivalent modifications satisfies a threshold; and
in response to determining that the amount of semantically equivalent modifications satisfies the threshold, updating the process template to include a modification of the semantically equivalent modifications to provide an updated process template.

15. One or more transitory or non-transitory computer-readable storage media comprising:
computer-executable instructions that, when executed by a computing system comprising at least one memory and at least one hardware processor coupled to the at least one memory, cause the computing system to receive a first plurality of modifications to a process template, the process template comprising on or more event definitions, wherein each modification of the first plurality of modifications comprises a modification of an event definition or an addition of an event definition;
computer-executable instructions that, when executed by the computing system, cause the computing system to determine whether at least a subset of the plurality of modifications are semantically equivalent;
computer-executable instructions that, when executed by the computing system, cause the computing system to determine whether an amount of semantically equivalent modifications satisfies a threshold; and
computer-executable instructions that, when executed by the computing system, cause the computing system to, in response to determining that the amount of semantically equivalent modifications satisfies the threshold, update the process template to include a modification of the semantically equivalent modifications to provide an updated process template.
